# EUROPEAN PATENT APPLICATION

(11) **EP 4 492 837 A1**
(43) Date of publication of application: **15.01.2025**
(21) Application number: 23315276.8
(22) Date of filing: 11.07.2023
(51) Int. Cl.: H04W 8/18, H04W 8/20, H04W 12/06, H04W 4/80

(54) **METHOD FOR ACTIVATING A SUBSCRIPTION AND CORRESPONDING SECURE ELEMENTS**

(71) Applicant: THALES DIS FRANCE SAS, 92190 Meudon (FR)
(72) Inventor: Imoucha, Franck, 13390 AURIOL (FR); Regnault, Nicolas, 13600 LA CIOTAT (FR); Dany, Vincent, 13400 AUBAGNE (FR)
(74) Representative: Scheer, Luc

(57) **Abstract**

The invention concerns a method for activating a subscription by a first secure element embedded or integrated in a first device (1), the subscription being called second subscription and being installed in a second secure element embedded or integrated in a second device (2), the method comprising:
- sending an activation command from the first secure element to the second secure element, through a short range channel, after having performed a mutual authentication between the first and second secure elements;
- sending from the second secure element to the first secure element an acknowledgment message through the short range channel, if the second secure element receives the activation command from the first secure element;
- deactivating the subscription, called first subscription, in the first secure element upon receiving the acknowledgment message;
- sending from the first secure element to the second secure element a transfer acknowledgment message through the short range channel;
- activating the second subscription in the second secure element upon receiving the transfer acknowledgment message.

## Description

The present invention relates to telecommunication and more precisely to subscriptions of MNOs (Mobile Network Operators) stored at the level of secure elements, like eUICCs (embedded UICCs) or iUICCs (integrated UICCs), these secure elements cooperating with telecommunication terminals (devices).

The telecommunication terminals can be smartphones, connected watches, vehicles, computers,... eUICCs and iUICCs have the particularity to comprise credentials of telecommunication subscriptions without being removable from the telecommunication terminal with which they cooperate, unlike removable UICCs (like SIM cards for instance).

The number of devices embedding eUICCs/iUICCs per user is today increasing and a given user has to pay a MNO for each subscription he is using, i.e. for each terminal he owns.

For example, a user can have a first subscription for his smartphone, a second one for his computer and a third one for his connected watch. He has therefore to pay for three different subscriptions.

When a subscription is comprised in a removable secure element, like a SIM card for example, the user can extract the card from the terminal comprising this SIM card and insert it in another terminal. This can be called "plastic roaming". However, this is not possible with embedded or integrated UICCs.

This leads to look for ways to transfer a subscription from one device to another. Some solutions exist and some transfers could be temporary (e.g., end user does not use the same device for sport and party or work).

An important point is that MNOs are mandating clones protection on any operation. This means that MNOs want to be sure that a given subscription cannot be present or active at the same time on two different terminals.

In the prior art, it is for example known to delete a subscription present in a first secure element present in a first device and to download this subscription in a second secure element present in a second device. But this operation requires to be online and is costly (a new download of the subscription occurs at each switch).

The proposed invention proposes a solution to this problem.

More precisely, the invention proposes a solution having the advantages of "plastic roaming" but applied to embedded or integrated UICCs, with the warranty that a subscription has not been cloned and that this subscription cannot be activated on two different terminals at the same time.

In this respect, the invention proposes a method according to claims 1 to 7.

The invention also proposes embedded or integrated secure elements according to claims 8 and 9.

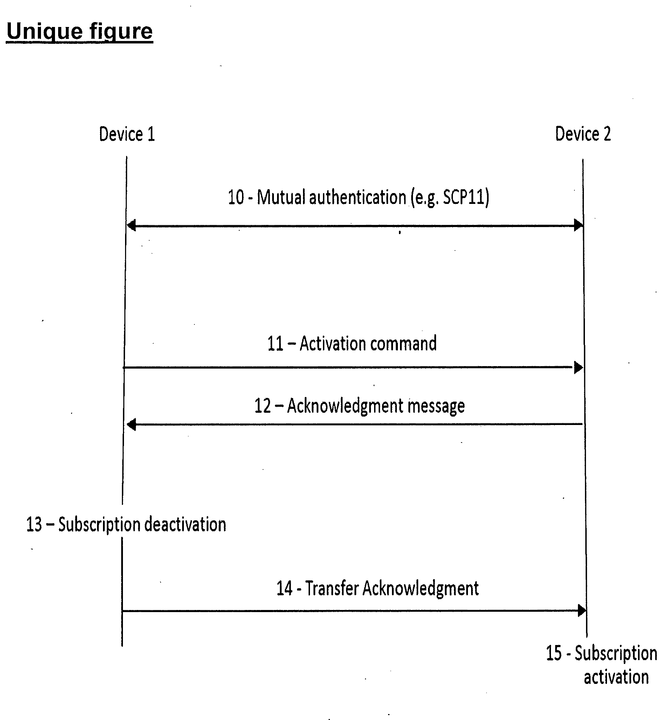

The present invention will be better understood by reading the following description of the unique figure that represents exchanges between two terminals, each device comprising an eUICC or an iUICC, each eUICC or iUICC storing a subscription.

In the figure, two devices 1 and 2 are represented.

Device 1 comprises a first eUICC or an iUICC storing a first subscription and device 2 comprises a second eUICC or an iUICC storing a second subscription.

Only one subscription is active at the same time, as it will be seen hereafter.

The subscriptions are from a same MNO or from MNOs having agreements together. The subscriptions are the results of the installation of pre-loaded profiles (for example done by GSMA RSP or by transfer from another device).

The situation is: The first subscription is active in the first secure element/device 1 and the second subscription is inactive in the second secure element/device 2.

The user wants to render the second subscription active and the first subscription inactive.

As an example, the first subscription is active in his smartphone and wants to make sport with his connected smartwatch (second device). He does not need his smartphone during his sport activity but on his smartwatch during this activity. He then wishes to render the first subscription inactive and the second subscription active.

In order to achieve this goal, he uses the LUI (Man-Machine interface) of his first device (his smartphone) in order to realize a pairing (step 10) between his two devices. This pairing corresponds to a mutual authentication between device 1 and device 2. This can be done for example through the protocol SCP11.

The first and second secure elements have then a mutual trust (e.g. because they are both GSMA certified).

In a second step 10, the first secure element sends an activation command to the second secure element. This can be for example a token or a challenge.

The token transfer is done in a way that an attacker could never have it present in the two devices at the same time, even in cutting the connection at any time.

The channel used for communicating between the first and the second secure elements is a short range channel independent of the MNO network. It can be for example a BLE channel (Bluetooth Low Energy), a WIFI channel, a NFC channel, a UWB channel or even a wired connection (with a USB cable for example). The sending of this command can be activated by the LPA of the first device 1 or by approaching the first device to a tag comprising instructions for executing this step.

The activation command corresponds to a command to activate the second subscription present in the second secure element, the first subscription being active and the second one being inactive. The command corresponds to a token or a flag meaning that its owner (the eUICC) has an enabled subscription. An active subscription means that the device in which the corresponding secure element is comprised is fully operational: The device is connected to a MNO network and can establish and receive calls, data, .... In contrast, a non-active subscription of a subscription means that the corresponding device has no connection at all to any MNO network.

The secure element that does not have the token forbids the corresponding GSMA profile to be enabled or is blocking network connection (not authenticate, reset of security contexts and LOCIs). Other solutions are possible, the main point being that no network connection is possible if the subscription is not active.

As described in SGP.22 RSP Technical Specification, V 3.0; a profile can be enabled or disabled.

When disabled (deactivated), all files and applications (e.g. NAA) present in the profile are not selectable.

When enabled (activated), the files and/or applications (e.g., NAA) of the profile are selectable. At the next step 12, the secure element of the device 11 sends to the first secure element an acknowledgment message through the short-range channel, in response to the activation command. Of course, this is only performed if the second secure element receives the activation command from the first secure element.

At the next step 13, the secure element comprised in device 1, upon receiving the acknowledgment message, deactivates the subscription present in this secure element since it knows that device 2 (its secure element) is ready for activating its subscription. Device 1 is after this step no more active and device 1 cannot use anymore its subscription.

At step 14, the secure element of device 1 sends to the second secure element of device 2 a transfer acknowledgment message through the short-range channel. This transfer acknowledgment message indicates to the second secure element that the first secure element has deactivated its subscription and that the second secure element is allowed to activate its subscription.

Then, at step 15, upon receiving the transfer acknowledgment message, the secure element of device 2 activates its resident subscription and has now a network connection. It is fully operational for establishing or receiving calls and exchanging data.

Optionally, once active, the device/secure element is notifying the back-end system of the MNO of its IMEI/EID/ICCID/IMSI/SUPI.

In case of an active device/ secure element is stolen, the back server of the MNO can transfer the activation token to another device/ secure element after having deactivated the subscription of stolen device in the core network.

An improvement of the present invention consists in including a session identifier in the messages exchanged during steps 11, 12 and 14. This permits to reestablish the communication between the two secure elements in case of a loss of a message (steps 11, 12 and 14).

In a preferred embodiment, the activation command comprises compatibility metadata that the second device analyses for compatibility check. For example, the metadata are at least one of:
- the MNC of the MNO of the first subscription;
- the type of the first subscription;
- the type of the first device.

Based on that check the second device could reject the transfer for technical or commercial reason.

The first and second subscriptions can have the same IMSI/Ki or different IMSIs/Kis. The sole right that is transferred from the source secure element to the target secure element is a right to use a subscription.

The invention also concerns an embedded or integrated secure element, called first secure element, the first secure element comprising a first subscription and cooperating with a first device, the first secure element being configured for:
- transmitting an activation command to an embedded or integrated secure element, called second secure element, of a second device, through a short range channel, after having performed a mutual authentication with the second secure element;
- receiving from the second secure element an acknowledgment message in response to the activation command;
- deactivating the first subscription upon receiving the acknowledgment message;
- sending to the second secure element a transfer acknowledgment message through the short range channel.

Finally, the invention concerns an embedded or integrated secure element, called second secure element, the second secure element comprising a subscription, called second subscription, and cooperating with a device, called second device, the second secure element being configured for:
- receiving an activation command from an embedded or integrated secure element, called first secure element, of a first device, through a short range channel, after having performed a mutual authentication with the first secure element;
- sending to the first secure element an acknowledgment message in response to the activation command;
- receiving from the first secure element a transfer acknowledgment message through the short range channel;
- activating the second subscription upon receiving the transfer acknowledgment message.

## Claims

1. A method for activating a subscription by a first secure element embedded or integrated in a first device (1), the subscription being called second subscription and being installed in a second secure element embedded or integrated in a second device (2), the method comprising:
i- sending an activation command from the first secure element to the second secure element, through a short range channel, after having performed a mutual authentication between the first and second secure elements;
ii- sending from the second secure element to the first secure element an acknowledgment message through the short range channel, if the second secure element receives the activation command from the first secure element;
iii- deactivating the subscription, called first subscription, in the first secure element upon receiving the acknowledgment message;
iv- sending from the first secure element to the second secure element a transfer acknowledgment message through the short range channel;
v- activating the second subscription in the second secure element upon receiving the transfer acknowledgment message.

2. A method according to claim 1, wherein the short range channel is one of:
- a BLE channel;
- a WIFI channel;
- a NFC channel;
- a UWB channel;
- a wired connection.

3. A method according to claim 1 or 2, wherein the messages sent at steps -i-, -ii- and -iv-are including a session identifier.

4. A method according to any of the claims 1 to 3, wherein the activation command comprises compatibility metadata that said second device (2) analyses for compatibility check.

5. A method according to any of the claims 1 to 4, wherein the metadata are at least one of:
- the MNC of the MNO of the first subscription;
- the type of the first subscription;
- the type of said first device (1).

6. A method according to any of the claims 1 to 5, wherein the first and second subscriptions have the same IMSI/Ki.

7. A method according to any of the claims 1 to 5, wherein the first and second subscriptions have different IMSIs/Kis.

8. An embedded or integrated secure element, called first secure element, said first secure element comprising a first subscription and cooperating with a first device (1), said first secure element being configured for:
- transmitting an activation command to an embedded or integrated secure element, called second secure element, of a second device, through a short range channel, after having performed a mutual authentication with said second secure element;
- receiving from said second secure element an acknowledgment message in response to said activation command;
- deactivating said first subscription upon receiving said acknowledgment message;
- sending to said second secure element a transfer acknowledgment message through said short range channel.

9. An embedded or integrated secure element, called second secure element, said second secure element comprising a subscription, called second subscription, and cooperating with a device, called second device (2), said second secure element being configured for:
- receiving an activation command from an embedded or integrated secure element, called first secure element, of a first device (1), through a short range channel, after having performed a mutual authentication with the first secure element;
- sending to said first secure element an acknowledgment message in response to said activation command;
- receiving from said first secure element a transfer acknowledgment message through said short range channel;
- activating said second subscription upon receiving said transfer acknowledgment message.
